# EUROPEAN PATENT APPLICATION

(11) **EP 3 026 557 A1**
(43) Date of publication of application: **01.06.2016**
(21) Application number: 14306918.5
(22) Date of filing: 28.11.2014
(51) Int. Cl.: G06F 11/10, G06F 21/00

(54) **Method and device for providing verifying application integrity**

(71) Applicant: Thomson Licensing, 92130 Issy-les-Moulineaux (FR)
(72) Inventor: Salmon-Legagneur, Charles, 35576 Cesson Sévigné (FR); Karroumi, Mohamed, 35576 Cesson Sévigné (FR)
(74) Representative: Browaeys, Jean-Philippe

(57) **Abstract**

A device (110) downloads and installs (S204) an APK file for the application, during which the code is modified. A checksum for the modified code is sent (S206) to a trusted entity (130) that checks (S208) that the received checksum matches a stored checksum for the application. If so, the received checksum is signed (S210) and returned (S212) to the device (110) where it is stored (S214). The device can then check the integrity of the modified code (S216) by calculating a checksum for the modified code that is compared to the signed checksum. The solution is particularly suitable for devices using the Android OS since the DEX during installation is optimized to an ODEX for which there is no certified checksum.

## Description

### TECHNICAL FIELD

The present disclosure relates generally to computer systems and in particular to integrity of software code in such systems.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

It is, for various reasons, often desirable to ensure that processing devices execute software that has not been tampered with. To this end, different techniques can be used to protect a software image against tampering attacks. The most common technique is to compute a signature or a checksum over code segments and then verify the signature or checksums at a later stage. Checksums are generally computed and verified without any secret while the generation of a cryptographic signature requires a private key and verification of the signature the corresponding public key.

An example of checksum-based protection is CRC32 for the Portable Executable (PE) format used in the Windows operating system. A PE header contains a CRC32 field that gives the checksum of the corresponding code section. To bypass the protection successfully, an attacker first modifies the code section and then replaces the original checksum with a new value computed over the modified code section. This type of attack is possible since the attacker does not need any secret to update checksums of modified code sections.

Given the weakness of checksums, cryptographic signatures are a preferred solution. The generation of the signature is performed before the code release and uses a private (and thus secret) key. The associated public key is appended to the code and later used to check the code integrity at installation of the code or at runtime. An attacker can still modify the code, but since a correct signature for the code cannot be generated without the private key, the attack fails.

Many solutions exist for checking the integrity of applications written in native code, such as the solutions provided by Arxan (GuardIT™), Metaforic (Metafortress™), etc. Native code is a set of assembler instructions directly executable by the processor. The set of instructions does not change after installation, which means that a program integrity value remains the same before and after installation (i.e. remains constant over time). In this case, the signature can be generated beforehand and delivered with the application package.

On the other hand, applications with interpreted code - such as code written in Java, Android DEX code, etc. - comprise intermediate instructions that must be passed through an interpreter before it is executed. Unlike native code, interpreted code can be modified after installation time for optimization purposes. The code modification is generally very dependent on the target platform and is thus not necessarily predictable. If the code is modified, a signature generated at compilation time cannot be used to check code integrity and authenticity dynamically at runtime.

To distribute and install application software onto the previously mentioned Android operating system a file format called APK - Android Application PacKage - is used. To make an APK file, a program for Android is first compiled to an intermediate language, and then its parts are packaged into a compressed archive file (ZIP format). The archive file contains the entire program code in a single DEX (Dalvik Executable code) file, various resources (e.g. image files), and the manifest of the APK file. The archive file comprises two additional files: CERT.SF and CERT.RSA. CERT.SF contains cryptographic hashes of all other archive files; CERT.RSA contains the public key used for signature verification. Only CERT.SF is signed with the RSA private key. The RSA signature for the CERT.SF enables validation of the entire content of the APK file during installation. Indeed, all the files mentioned in the CERT.SF file are *indirectly* signed because CERT.SF contains their hashes. Altering any file before installation would cause an error because the software would detect that a file digest does not match the hash in the CERT.SF file. Alternatively, modifying a cryptographic hash value inside the CERT.SF file (as in the attack against checksum-based verification already described) would lead to an error during the signature verification.

A DEX file header also contains a global checksum for the contents of the DEX file. At the first execution of the application, the Android system uses an optimizer which modifies a DEX interpreted byte code into an optimized machine-instructions sequence called ODEX (Optimized DEX) just in time before execution. The optimizer also updates the checksum. The ODEX file is then stored in a specific repository within the Android file system for future use. The ODEX file then becomes the reference for the application software and, when it is present, the original DEX file is not used anymore.

At runtime, the system may verify the integrity of the application using the ODEX checksum. However this option is not set by default in the Android operating system and the Dalvik machine, which is used to execute ODEX code, does not always check ODEX checksums, since checksum verification has a non-negligible impact on execution performance and boot time.

Thus it can be seen that in an Android system, the APK signature is verified only at installation time. Furthermore, the APK is not signed by a central authority; the developers use their own non-trusted self-signed certificates that can be easily generated.

As already mentioned, Android applications use an interpreter portable format (DEX). This binary format must execute on a large set of devices with different architectures and characteristics: ARM, x86, MIPS, Little/Big Endian etc. In order to improve performance, the DEX code is modified at the first use of the application to produce the ODEX that is optimized for the target device. During optimization, various things can be modified in the code: instructions can be replaced by others, the alignment of instructions may be changed, the byte order can be swapped, and so on.

The optimization then raises a security issue. While the signature of the DEX file can still be verified, this is not the case for the ODEX file since it has been modified and its integrity is no more linked to the original DEX signature. In other words, integrity and authenticity can only be verified at installation, but not at runtime since an attacker is able to modify the ODEX code and update the checksum in the header accordingly.

The system is thus vulnerable to at least two classes of attacks: the remote attack and the root attack. In the remote attack, a downloaded malicious application elevates its privileges and gains system permissions. The malicious application may then tamper with ODEX files stored on the Dalvik cache repository of the internal storage. In the root attack, the attacker obtains an Android device, for example by purloining the device or by accessing the device when the owner is absent without locking the device session. The attacker can then download the application from the internal storage through a USB link, modify the application, and then push the modified application back onto the internal storage. For the latter attack to be successful, the device must be "rooted" (i.e. allow "root access" control of the device's Android system).

The trust in Android application integrity can thus be broken during the application's life cycle. It is possible to trust what is installed on an Android system, but not necessarily what is running.

It will be appreciated that it is desired to have a solution that overcomes at least part of the problems related to the integrity and authenticity of interpreted code applications. The present disclosure provides such a solution.

### SUMMARY OF DISCLOSURE

In a first aspect, the disclosure is directed to a device for processing an application. The device comprises an interface configured to receive the application, memory configured to store the application and a signed checksum and a processing unit configured to modify the application to obtain a modified application, generate a checksum for the modified application, send the checksum for the modified application to a trusted entity, receive a signed checksum from the trusted entity, and store the signed checksum in the memory.

Various embodiments of the first aspect include:
That the application is received with a first checksum and that the processing unit is further configured to use the first checksum to verify the integrity of the application.
That the processing unit is configured to use the signed checksum to verify the integrity of the modified application at runtime of the modified application.
That the application is implemented as Dalvik Executable code and the modified application is implemented as Optimized Dalvik Executable code. It is advantageous that the processing unit is configured to replace a checksum for the Dalvik Executable code in a header for the Dalvik Executable code with the signed checksum.
That the device is a smartphone or a tablet.
That the trusted entity is implemented in the device. It is advantageous that the trusted entity is configured to store at least one checksum for the application, to verify that the checksum for the modified application matches a stored checksum for the application, and to use a signing key to sign the checksum for the modified application. It is preferred that the signing key is protected using software protection techniques.
That the trusted entity is a separate device and that the interface is further configured to receive the checksum for the modified application from the processing unit and send the checksum for the modified application to the trusted entity, and to receive the signed checksum from the trusted entity and send the signed checksum to the processing unit.
That the processing unit is configured to send an activation code for the application together with the checksum for the modified application.
That the processing unit is configured to receive the signed checksum together with a signing certificate.

In a second aspect, the disclosure is directed to a method for processing an application. A device receives the application, modifies the application to obtain a modified application, generates a checksum for the modified application, sends the checksum for the modified application to a trusted entity, receives a signed checksum from the trusted entity, and stores the signed checksum in the memory.

In a third aspect, the disclosure is directed to a trusted entity for signing checksums for an application. The trusted entity comprises memory configured to store a plurality of checksums for the application; an interface configured to receive a checksum for the application from a device; and a processing unit configured to verify that the checksum received for the application matches a stored checksum for the application and, in case of a match, to sign the received checksum for the application to obtain a signed checksum. The interface is further configured to send the signed checksum to the device.

In a fourth aspect, the invention is directed to a method for signing checksums for an application. A processing unit of a trusted entity storing a plurality of checksums for the application receives a checksum for the application from a device, verifies that the checksum received for the application matches a stored checksum for the application, and, in case of a match, signs the received checksum for the application to obtain a signed checksum, and sends the signed checksum to the device.

### BRIEF DESCRIPTION OF DRAWINGS

Preferred features of the present disclosure will now be described, by way of non-limiting example, with reference to the accompanying drawings, in which
Figure 1 illustrates an exemplary system in which the disclosure is implemented; and
Figure 2 illustrates a preferred embodiment of a method according to a preferred embodiment of the present disclosure.

### DESCRIPTION OF EMBODIMENTS

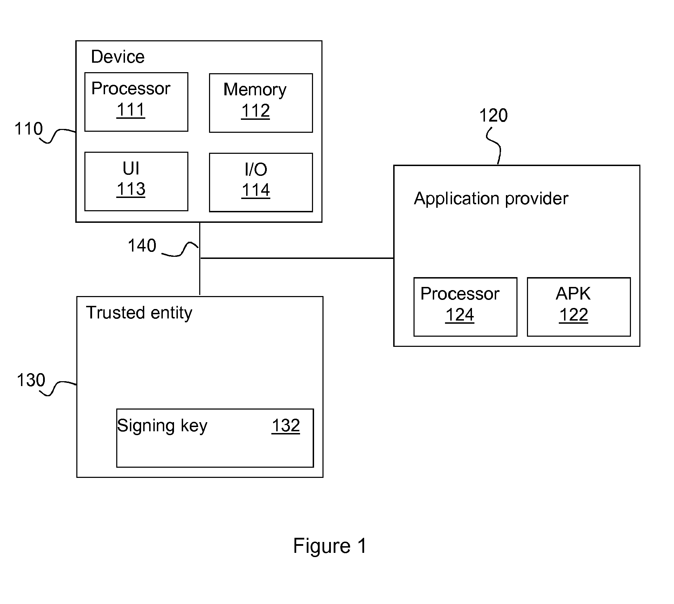

Figure 1 illustrates an exemplary system in which the disclosure is implemented. The system comprises a device 110, an application provider (application store) 120 and a trusted entity 130. The device 110 can be any kind of suitable device running an Android OS, such as a smartphone or a tablet, and it comprises at least one hardware processing unit ("processor") 111, memory 112, a user interface 113 for interacting with a user, and a communications interface 114 for communication with the application provider 120 and the trusted entity 130 over a connection 140 such as the Internet. The skilled person will appreciate that the illustrated device is very simplified for reasons of clarity and that real devices in addition would comprise features such as power supplies and persistent storage.

The application provider 120 stores at least one application APK file 122 that can be downloaded by the device 110. The application provider 120 also comprises a hardware processor 124 configured to generate checksums for different ODEXs that correspond to the application DEX file. These checksums can be generated by installing the DEX file on different test or reference devices and calculate the checksum from the resulting ODEX or by performing different optimizations to the DEX file and then generate checksums from the resulting ODEXs. The application provider 120 is also configured to send the checksums for the different ODEXs that correspond to the application DEX file to the trusted entity 130.

The trusted entity 130 can be implemented inside the Android OS or on an independent device. The trusted entity 130 comprises memory for storing ODEX checksums for an application, an interface for receiving an ODEX checksum from the Android OS on the device 110, a processing unit for verifying that the received ODEX checksum for an application matches a stored ODEX checksum for the application, a private signing key 132 to be used for signing ODEX checksums and an interface for sending a signed ODEX checksum to the device 110. In case the trusted entity 130 is implemented inside the Android OS, the private signing key is preferably protected using software protection techniques, such as code obfuscation and white-box cryptography, or through the use of specific hardware such as a key-store or a crypto engine.

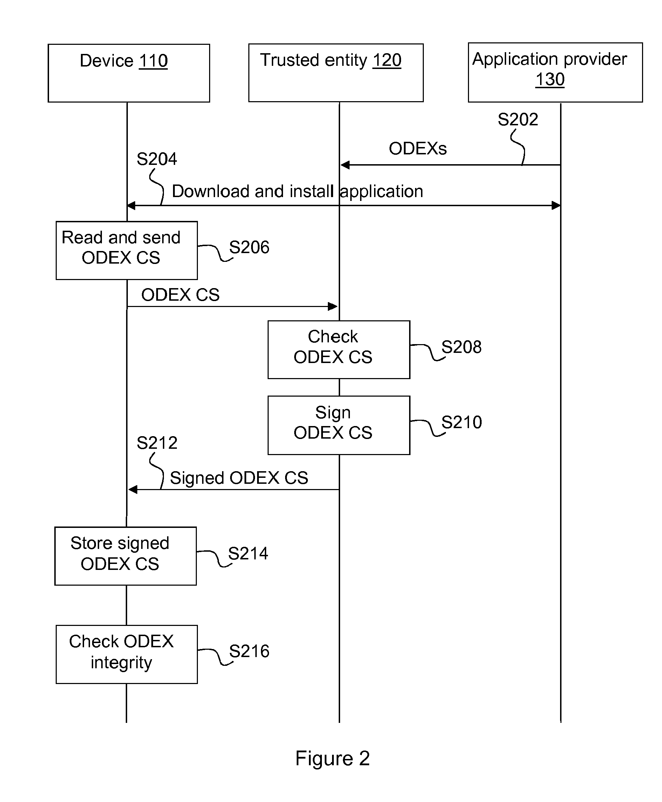

Figure 2 illustrates a flowchart of a method according to a preferred embodiment. In step S202, the application provider 120 sends to the trusted entity 130 a number of ODEX checksums for an application it offers to Android devices. In step S204, the device 110 downloads and installs the APK file for the application. As already mentioned, during installation, the device 110 optimizes the DEX in the APK file, obtains an ODEX and replaces the DEX checksum with a checksum for the ODEX in the DEX header. It should be noted that the hash in the CERT.SF file enables the device 110 to verify the integrity of the DEX (and thus also of the ODEX at installation if identical).

When the application is to be executed for the first time, a Source Acquisition module reads the content of the ODEX file into the memory 112, reads the ODEX checksum (CS) from the DEX header and transmits it, in step S206, to the trusted entity 130. The ODEX checksum is preferably sent over a protected connection such as a Secure Authenticated Channel. The Source Acquisition module is included in a native library of the application (part of Android application can be developed using code other than Java such as C/C++ language). The Java Native Interface (JNI) enables JAVA code running in a Dalvik Machine to call native libraries delivered with the application.

In case the application requires an activation code to be entered, the checksum could be sent to the remote trusted entity 130 together with the activation code.

The trusted entity 130 preferably checks, in step S208, that the received ODEX checksum corresponds to one of the stored ODEX checksums for the application. If this is the case, in step S210 the trusted entity 130 signs the received ODEX checksum using the private signing key and returns, in step S212, the signed ODEX checksum to the device 110. The trusted entity 130 can also send a signing certificate comprising a corresponding public key together with the signed ODEX checksum.

In step S214, the Source Acquisition module receives and stores the signed ODEX checksum (and, if available and needed, the signing certificate).

The application or the Android OS, having access to a public key corresponding to the private signing key, can then check the integrity of the ODEX, in step S216, by calculating a checksum for the ODEX that is compared to the signed ODEX checksum. The integrity of the signing certificate can also be verified through the use of a trusted root certificate installed on the device or through the use of a chain of certificates eventually leading to the trusted root certificate.

At subsequent executions of the application or at any time during the current execution of the application, the integrity of the application may be verified the same way as in step S216, i.e. by calculating a checksum for the ODEX and compare it to the signed ODEX checksum. To this end, it is advantageous that the option to check the integrity of the ODEX is set in the Android operating system and the Dalvik machine.

It is noted that the solution is compatible with currently deployed Android systems since the code necessary for runtime integrity verification is either part of the existing Android OS or part of the delivered APK package for the application.

In the present description, the term 'checksum' is intended to cover a value that enables verification of whether or not the data for which it was generated has been modified after generation of the checksum. A checksum may thus for example also be a hash value, a Cyclic Redundancy Check (CRC) value or other kind of digest; it is preferred that it is computationally infeasible to obtain the code from the checksum. In addition, while a single checksum has been used for clarity, a plurality of checksums may be used, wherein a checksum may be generated for a distinct part of the code (wherein the different parts may overlap), and that a plurality of checksums for different parts of the code are used to generate a single, global checksum that is used for the comparison. The signature may be any suitable cryptographic signature such as a Hash-based Message Authentication Code (HMAC) or a signature based on for example RSA, Digital Signature Algorithm (DSA) or Elliptic Curve Digital Signature Algorithm (ECDSA).

It will be appreciated that the present solution can counter remote attacks successfully.

Root attacks can also be countered if the trusted entity checks that the received ODEX checksum corresponds to a 'legitimate' ODEX checksum. This is to verify that the received ODEX checksum is not the checksum of an APK comprising modified code (which may be the case if the attacker modifies the code after download from the application provider). For this reason is it preferable for the application provider 120 to send the possible ODEX checksums to the trusted entity 130; in a variant, it is the trusted entity 130 that generates the different ODEX checksums for the application. It is noted that the number of potential checksums depends on a limited set of device hardware parameters (CPU endianness, CPU Symmetric Multiprocessing (SMP) mode, etc.) and thus the number of parameter combinations is limited. For instance, only the SMP mode differs for DEX optimization between a Nexus 7 and a Samsung galaxy tab P5100.

While the present solution has been described in an Android environment, it can be adapted to other operating systems that modify the code during installation without enabling secure integrity verification of the installed application at runtime.

It will thus be appreciated that the present disclosure provides a solution that can enable runtime integrity of applications on Android devices.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A device (110) for processing an application, the device comprising:
an interface (114) configured to receive the application;
memory (112) configured to store the application and a signed checksum; and
a processing unit (111) configured to:
- modify the application to obtain a modified application;
- generate a checksum for the modified application;
- send the checksum for the modified application to a trusted entity;
- receive a signed checksum from the trusted entity; and
- store the signed checksum in the memory (112).

2. The device of claim 1, wherein the application is received with a first checksum and wherein the processing unit is further configured to use the first checksum to verify the integrity of the application.

3. The device of claim 1, wherein the processing unit is further configured to use the signed checksum to verify the integrity of the modified application at runtime of the modified application.

4. The device of claim 1, wherein the application is implemented as Dalvik Executable code and the modified application is implemented as Optimized Dalvik Executable code.

5. The device of claim 4, wherein the processing unit is configured to replace a checksum for the Dalvik Executable code in a header for the Dalvik EXecutable code with the signed checksum.

6. The device of claim 1, wherein the device is a smartphone or a tablet.

7. The device of claim 1, wherein the trusted entity is implemented in the device.

8. The device of claim 7, wherein the trusted entity is configured to store at least one checksum for the application, to verify that the checksum for the modified application matches a stored checksum for the application, and to use a signing key (132) to sign the checksum for the modified application.

9. The device of claim 8, wherein the signing key is protected using software protection techniques.

10. The device of claim 1, wherein the trusted entity is a separate device and wherein the interface (114) is further configured to receive the checksum for the modified application from the processing unit and send the checksum for the modified application to the trusted entity, and to receive the signed checksum from the trusted entity and send the signed checksum to the processing unit.

11. The device of claim 1, wherein the processing unit is further configured to send an activation code for the application together with the checksum for the modified application.

12. The device of claim 1, wherein the processing unit is configured to receive the signed checksum together with a signing certificate.

13. A method for processing an application comprising at a device (110):
- receiving (S204) the application;
- modifying (S206) the application to obtain a modified application;
- generate (S206) a checksum for the modified application;
- send (S206) the checksum for the modified application to a trusted entity;
- receive (S212) a signed checksum from the trusted entity; and
- store (S214) the signed checksum in the memory (112).

14. A trusted entity (120) for signing checksums for an application comprising:
- memory configured to store a plurality of checksums for the application;
- an interface configured to receive a checksum for the application from a device; and
- a processing unit configured to verify that the checksum received for the application matches a stored checksum for the application and, in case of a match, to sign the received checksum for the application to obtain a signed checksum;
wherein the interface is further configured to send the signed checksum to the device.

15. A method for signing checksums for an application comprising at a processing unit of a trusted entity storing a plurality of checksums for the application:
- receiving a checksum for the application from a device;
- verifying (S208) that the checksum received for the application matches a stored checksum for the application;
and, in case of a match:
- signing (S210) the received checksum for the application to obtain a signed checksum; and
- sending (S212) the signed checksum to the device.
